Europäisches Patentamt

European Patent Office

Office européen des brevets

(19)

(11) Publication number: **0 058 935**
**B1**

(12) **EUROPEAN PATENT SPECIFICATION**

(45) Date of publication of patent specification: **12.09.84**

(21) Application number: **82101185.5**

(22) Date of filing: **16.02.82**

(51) Int. Cl.³: **B 01 D 47/16,** B 01 D 50/00,
B 01 D 53/18

(54) **Device for removing gaseous components and/or solid impurities present in a gaseous fluid flow.**

(30) Priority: **23.02.81 FI 810548**

(43) Date of publication of application:
**01.09.82 Bulletin 82/35**

(45) Publication of the grant of the patent:
**12.09.84 Bulletin 84/37**

(84) Designated Contracting States:
**AT BE CH DE FR GB IT LI NL SE**

(56) References cited:
**FR-A-2 299 891**
**FR-A-2 321 314**

(73) Proprietor: **Järvenpää, Viljo Juhana**
**Vellamontie 21 as. 6**
**SF-04200 Kerava (FI)**

(72) Inventor: **Järvenpää, Viljo Juhana**
**Vellamontie 21 as. 6**
**SF-04200 Kerava (FI)**

(74) Representative: **Tiedtke, Harro, Dipl.-Ing. et al**
**Patentanwaltsbüro Tiedtke-Bühling-Kinne-**
**Grupe-Pellmann-Grams Bavariaring 4**
**D-8000 München 2 (DE)**

Courier Press, Leamington Spa, England.

## Description

The present invention concerns a device for removing gaseous components and/or solid impurities present in a gaseous fluid flow, comprising a frame structure, a fluid flow inlet connector, a scrubber means disposed within the frame structure, an exit connector for the purified fluid flow, and a scrubbing liquid inlet connector wherein, in said device, the scrubbing liquid exit return flow has been disposed to pass through the fluid flow inlet connector in opposite direction with reference to the gaseous fluid flow.

Gaseous fluid flows frequently contain impurities both in the form of gaseous components and of solid particles, which have to be removed prior to blowing out or reusing the fluid flow. In practice that situation is also frequently encountered in which the gas flow contains solid components in such abundance that their separation is indicated before the flow enters the scrubber. It is common in usual circumstances to use towards purification of the gaseous fluid flow a wet scrubber, in which the gaseous fluid flow is conducted into the frame portion of a separator, in other words, into a fluid tank or reaction portion, where it is tried to bring the scrubbing liquid and the gaseous fluid flow into the most complete contact possible with each other. At this scrubbing phase at least part of the coarser fraction of the solid matter separates and remains in the separating tank. However, endeavours are mostly to achieve that the greater part of the solid matter is separated in dry state already, before the scrubber, either in a settling chamber or in a cyclone separator. By this design the advantage is gained that the quantity of impurities carried into the scrubbing liquid is minimized, whence the amount of sludge that has to be carried off will also remain minimal. After the scrubber part usually a blower is provided because then the wear suffered by the blower will be less. After the blower follows furthermore a droplet separator; depending on the application this may consist of a grille, a set of gratings, droplet separators resembling a cyclone separator, various rotating and round towers, etc.

In scrubber designs of prior art, e.g. described in FR—A 2 321 314 the blower is usually similar to a conventional centrifugal blower. A blower design of the so-called distintegrator type is also known in the art, in which the fluid flow is directed with its impurities, as is also the scrubbing liquid. A design of this kind requires high power input from the drive, and the wear of the blower is also high.

In scrubbers of the venturi type, the gaseous fluid flow is accelerated with its impurities in the venturi section to gain a high velocity, and at the same time the scrubbing liquid is inducted into the accelerated fluid flow. After the venturi section, whereat the velocity of the gaseous fluid flow is reduced, there is a droplet separator, where in the first place the impurities serve as crystallisation nuclei for the drops.

One has also towards purification of a gaseous fluid flow employed the so-called S-wave scrubber, where the gaseous fluid flow, after flowing together with the scrubbing liquid through an S-wave shaped slit ends up in free space and thence further in a blower. There is no actual separate droplet separator: separation of droplets takes place in the free space after the S wave before the blower. In this design, too, the risk is present that super-condensing moisture may be entrained with the gaseous fluid flow and therefore droplets are flung out and into the surroundings.

From FR—A—2 299 891 a device is known which principally serves fro the heat exchange between a gas and a liquid. In addition, this device can be used for dedusting of smoke. In this application the smoke stream enters the device by a cylindrically shaped inlet tube from below and is mixed at the upper exit with water droplets under the action of a fan. By this a mist is generated which rises into a conically tapering portion of the device. There dust particles form nuclei of condensation and thereby fall into a collecting chamber from which the liquid is drawn off by a separate pipe. Also, this device requires hiph power inputs and leads to relatively high wear of the fan, because the fluid flow is treated with its impurities, e.g. a lot of solid matter, in the region of the fan, the scrubbing efficiency thereby being relatively small.

The object of the invention is to accomplish an improvement of scrubber designs known in the art. It is a detailed object of the invention: to provide a scrubber design by which a high scrubbing efficiency is attained without scrubbers requiring a high energy input. The other objects of the invention, and the advantages gainable with its aid, will become apparent from the disclosure of the invention.

The object of the invention is accomplished with a device of the kind disclosed at the beginning according to the characterising portion of appended claim 1.

The rest of the characteristic features of the means of the invention are stated in claims 2—4.

With the features of claim 3 the special advantageous effects are achieved, that the circulating fluid flow drives before itself droplets flung out by the blower means towards said holes and effects better setting into rotation in said inlet connector of the scrubbing liquid, the scrubbing liquid in rotary motion within said inlet connector having been disposed to produce in the fluid flow progressing in the opposite direction the most efficient possible pre-purifying effect.

By the device of the invention numerous significant advantages are gained. By the device of the invention a problem solution is achieved wherein only the gas which has already been nearly purified is carried to the final scrubbing together with a minimal scrubbing liquid quantity, with the consequence that the solid matter loading of the gas is minimal. It is then possible to manage in the driving of the blower means employed as scrubber means with low motor outputs, without any major amounts of energy, and at the same time the most efficient venturi action possible is still attained; in other words, one achieves high scrubbing efficiency and high velocities of the gaseous fluid flow, up to 60—100 m/s for instance. In the subsequent droplet separation the velocity of the gaseous fluid flow is reduced enough to make the liquid droplets separate and to enable them to run along the walls of the frame structure and down to the bottom, and further through apertures in the inlet connector into the inlet connector for pre-purification of the gaseous fluid flow. In the design of the invention in fact an energy consumption figure as low as $7.46 \times 10^2$ W (1 HP) per 1000 m³/h of gaseous fluid flow to be washed is achieved. The external available subatmospheric pressure will be about 2000 Pa, that is, the efficiency of the blower means is about 74%.

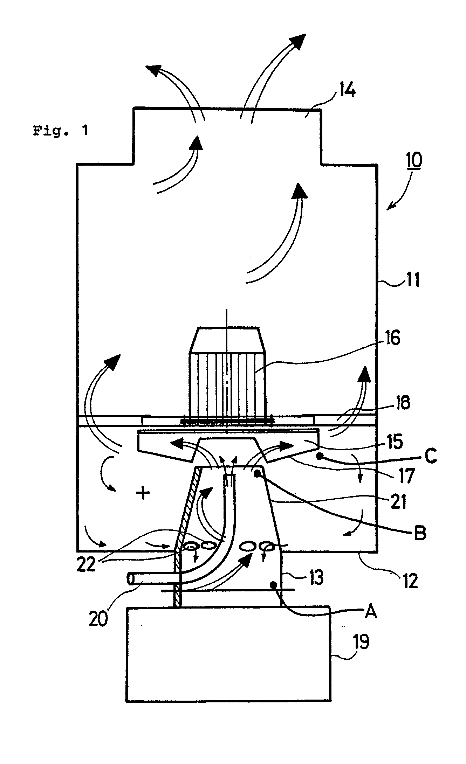

The invention is now described in detail with reference to a preferred embodiment of the invention, depicted in the figure of the attached drawing, but to which the invention is not meant to be exclusively confined.

The figure of the drawing presents, in schematical elevational view, an advantageous embodiment of the means of the invention.

In the figure of the drawing, the device of the invention in general is indicated by the reference numeral 10. The device 10 comprises a frame structure 11, 12, a fluid flow inlet connector 13, a scrubber means 15 disposed within the frame structure 11, 12, an exit connector 14 for carrying off the purified fluid flow, and a connector 20 for introducing scrubbing liquid into the means 10 and for contacting it with the fluid flow. In this embodiment, the gaseous fluid flow has been disposed to flow through a pretreatment section 19 into the inlet connector 13, whereby when flowing into the device 10 the gaseous fluid flow is already pre-purified. The pretreatment section 19 may consist e.g. of a cyclone separator or a scrubbing tube or another equivalent construction known in itself in the art, from which the gaseous fluid flow together with its non-abrasive impurities is conducted in a rotary motion about a vertical axis into the inlet connector 13.

In this embodiment a blower means is used as scrubber means 15, this blower means having been arranged to be driven by a motor 16. The impeller of the blower means 15 may be closed or open. In the present embodiment, the impeller has been provided with baffles 17 for directing the gaseous fluid flow along the vane of the blower means 15. The motor 16 rotating the impeller has in this embodiment been carried on the wall 11 of the frame structure by mediation of rods 18. Between the rods 18 and the wall 11 ample free space is left, so that the gaseous fluid flow can pass upwardly towards the exit connector 14.

In accordance with the fundamental idea of the invention, the end region 21—adjacent to the scrubber means 15—of the fluid flow inlet connector 13 has a diminishing cross sectional diameter for the purpose of accelerating the incoming fluid flow before the fluid flow enters the scrubber means 15. According to another important characteristic feature, the inlet connector 13 has been provided with holes 22 adapted to receive the return flow of the scrubbing liquid and to admit it into the inlet connector 13. It should be particularly noted that the holes 22 have been disposed to lie in that area of the inlet connector 13 where no acceleration is applied to the fluid flow.

In this embodiment, the scrubbing liquid inlet connector 20 has been disposed to pass through the wall of the fluid flow inlet connector 13 and to be directed within the inlet connector 13 towards its flow orifice pointing to the scrubber means 15.

The mode of operation of the device 10 of the invention is as follows. The gaseous fluid flow pre-purified in the pretreatment section 19 passes through the inlet connector 13 in a flow motion rotating about a vertical axis and it is accelerated in the conical section 21 from an initial velocity at point A about 7—12 m/s to 20—25 m/s at the point B. At this point, the scrubbing liquid is introduced through the connector 20 into the gaseous fluid flow, whereafter the blower means 15 accelerates the gaseous fluid flow and the scrubbing liquid from velocity 20—25 m/s at B to 60—100 m/s at C. By this design an extremely high scrubbing efficiency is achieved without need to employ a blower means 15 that would require high motor power. In the droplet separation following after the acceleration, the velocity of the gaseous fluid flow drops so much in the cowl section 21 that the droplets will separate and are enabled to run down along the wall 11 to the bottom 12 and further through the holes 22 into the inlet connector 13.

The holes 22 in the inlet connector 13 have been shaped so that they are adapted to direct the scrubbing fluid return flow to rotate within the inlet connector 13 in a rotary motion with the same sense of rotation as the gaseous fluid flow progressing in opposite direction, whereby the scrubbing fluid return flow as it flows downward in the inlet connector 13 passes perpendicularly to the upwardly flowing gaseous fluid flow and thus effects the most efficient possible prescrubbing of the gaseous fluid flow within the inlet connector 13. The downwardly flowing scrubbing liquid flows in this embodiment into a preseparator, which possibly also incorporates a liquid collection tank.

In the design according to the invention, the blower means 15 has been advantageously carried out so that the blower means 15 as it accelerates the fluid flow directs part of the purified fluid flow as a recycling flow back through the holes 22 13 into the inlet connector 13, whereby such a rotating fluid flow drives the liquid droplets flung out by the blower means 15 ahead of itself towards the holes 22 and causes the scrubbing liquid to be put in a rotary motion within the inlet connector 13. In the embodiment depicted in the figure of the drawing, the end portion 21 adjacent to the scrubber means 15 of the inlet connector 13 is conically tapering.

The device of the invention is not critical as regards the design selected for the scrubber means 15. Rotary power to the impeller may naturally be provided with an externally placed motor or by belt transmission, or using a hydraulic motor. The motor 16 may also be completely isolated from the gaseous fluid flow by covering it with appropriate protective shields. It is then for instance possible to cool the motor by an external air current. The exit connector 14 may equally be of another kind, and it may if required be provided, e.g. with an additional droplet separator in order to ensure the best possible droplet separation. Moreover, the conical portion 21 of the inlet connector 13 may be replaced merely with a constricted aperture, through which the gaseous fluid flow is admitted to flow to the impeller of the blower means 15.

## Claims

1. Device for removing gaseous components and/or solid impurities present in a gaseous fluid flow, comprising a frame structure (11, 12) a fluid flow inlet connector (13), a scrubber means (15) disposed within the frame structure (11, 12) an exit connector (14) for the purified fluid flow, and a scrubbing liquid inlet connector (20), wherein, in said device (10), the scrubbing liquid exit return flow has been disposed to pass through the fluid flow inlet connector (13) in opposite direction with reference to the gaseous fluid flow, characterized in that the end region (21)—adjacent to the scrubber means (15)—of the fluid flow inlet connector (13) has a cross-sectional diameter diminishing towards said scrubber means (15), and that said inlet connector (13) has been provided with holes (22) to receive and admit into said inlet connector (13) the return flow of the scrubbing liquid, said holes being disposed in that region of said inlet connector (13) where the flow of the fluid flow is not being accelerated.

2. Device according to claim 1, characterized in that the scrubbing liquid inlet connector (20) has been disposed to pass through the wall of the fluid flow inlet connector (13) and to be directed within the fluid flow inlet connector (13) towards the latter's flow orifice pointing to the scrubber means (15).

3. Device according to claim 1 or 2, characterized in that the scrubbing means (15) is a fluid flow accelerating blower means which, directs part of the purified fluid flow as a recirculating flow back, through the said holes (22), into said inlet connector (13).

4. Device according to any one of claims 1—3, characterized in that the fluid flow inlet connector (13) is conically tapering at its end region (21) adjacent to the scrubber means (15).

## Patentansprüche

1. Vorrichtung zur Entfernung von gasförmigen Komponenten und/oder Feststoff-Verunreinigungen, die in einem gasförmigen Fluidstrom vorhanden sind, mit einem Gehäuse (11, 12), einem Einlaßanschluß (13) für den Fluidstrom, einer innerhalb des Gehäuses (11, 12) angeordneten Reinigungseinrichtung (15), einem Auslaßanschluß (14) für den gereinigten Fluidstrom, und einem Einlaßanschluß (20) für Reinigungsflüssigkeit, wobei in der Vorrichtung (10) der ausgetretene Rückstrom der Reinigungsflüssigkeit so gelenkt ist, daß er bezüglich des gasförmigen Fluidstroms in entgegengesetzter Richtung durch den Einlaßanschluß (13) für den Fluidstrom geht, dadurch gekennzeichnet, daß der Endbereich (21), der in der Nähe der Reinigungseinrichtung (15) liegt, des Einlaßanschlusses (13) für den Fluidstrom einen sich in Richtung der Reinigungseinrichtung (15) verjüngenden Querschnittsdurchmesser hat, und daß der Einlaßanschluß (13) zur Aufnahme und zum Eintritt des Rückstroms der Reinigungsflüssigkeit in den Einlaßanschluß (13) mit Öffnungen (22) versehen ist, die in demjenigen Bereich des Einlaßanschlusses (13) angeordnet sind, an dem der Fluidstrom nicht beschleunigt ist.

2. Vorrichtung nach Anspruch 1, dadurch gekennzeichnet, daß der Einlaßanschluß (20) für die Reinigungsflüssigkeit durch die Wandung des Einlaßanschlusses (13) für den Fluidstrom geht und innerhalb dieses Einlaßanschlusses (13) auf dessen Strömungsöffnung zu gerichtet ist, die auf die Reinigungseinrichtung (15) weist.

3. Vorrichtung nach Anspruch 1 oder 2, dadurch gekennzeichnet, daß die Reinigungseinrichtung (15) eine den Fluidstrom beschleunigende Ventilatoreinrichtung ist, die einen Teil des gereinigten Fluidstroms als einen zurückzirkulierenden Strom durch die Öffnungen (22) in den Einlaßanschluß (13) richtet.

4. Vorrichtung nach einem der Ansprüche 1 bis 3, dadurch gekennzeichnet, daß der Einlaßanschluß (13) für den Fluidstrom an seinem Endbereich (21), der der Reinigungseinrichtung (15) naheliegt, konisch zuläuft.

## Revendications

1. Dispositif pour éliminer des composants gazeux et/ou des impuretés solides présents dans un flux de fluide gazeux, comprenant un cadre (11, 12), un raccord (13) d'entrée du flux de fluide, un moyen de séparation (15) logé à l'intérieur du cadre (11, 12) un raccord (14) de sortie du flux de fluide purifié, ainsi qu'un raccord (20) d'admission du liquide de lavage, dispositif (10) dans lequel le flux de sortie renvoyé du liquide de lavage a été agencé de faon à traverser le raccord (13) d'entrée du flux de fluide dans la direction opposée par rapport au flux de fluide gazeux, caractérisé par le fait que la région extrême (21)—adjacente au moyen de séparation (15)—du raccord (13) d'entrée du flux de fluide présente une section de diamètre décroissant en direction dudit moyen de séparation (15); et par le fait que ledit raccord d'entrée (13) a été muni de trous (22) pour recevoir et admettre dans ledit raccord d'entrée (13) le flux de retour du liquide de lavage, lesdits trous étant disposés dans la région dudit raccord d'entrée (13) dans laquelle l'écoulement du flux de fluide n'est pas accéléré.

2. Dispositif selon la revendication 1, caractérisé par le fait que le raccord (20) d'admission du liquide de lavage a été disposé de façon à traverser la paroi du raccord (13) d'entréé du flux de fluide et à s'étendre, à l'intérieur du raccord (13) d'entrée du flux de fluide, en direction de l'orifice d'écoulement de ce dernier orienté vers le moyen de séparation (15).

3. Dispositif selon la revendication 1 ou 2, caractérisé par le fait que le moyen de séparation (15) est une soufflerie accélérant le flux de fluide et renvoyant dans ledit raccord d'entrée (13), par l'intermédiaire desdits trous (22), une partie du flux de fluide purifié en tant que flux de remise en circulation.

4. Dispositif selon l'une quelconque des revendications 1 à 3, caractérisé par le fait que le raccord (13) d'entrée du flux de fluide décroît coniquement de section dans sa région extrême (21) adjacente au moyen de séparation (15).

Fig. 1